# EUROPEAN PATENT SPECIFICATION

(11) **EP 3 424 838 B1**
(45) Date of publication and mention of the grant of the patent: **21.10.2020**
(21) Application number: 17760335.4
(22) Date of filing: 03.03.2017
(51) Int. Cl.: B65D 63/10, F16B 2/08, B65B 13/02

(54) **RELEASABLE CABLE TIE**
LÖSBARER KABELBINDER
ATTACHE DE CÂBLE LIBÉRABLE

(30) Priority: 03.03.2016 KR 20160001137 U
(43) Date of publication of application: 09.01.2019
(73) Proprietor: Point & Edge Inc., Mapo-gu Seoul 03920 (KR)
(72) Inventor: JUNG, Je Wuk, Seoul 03069 (KR)
(74) Representative: Loyer & Abello
(86) International application number: PCT/KR2017/002310
(87) International publication number: WO 2017/150931

(56) References cited:
- WO-A1-2009/084302
- JP-A- H11 292 129
- JP-A- 2003 231 550
- JP-A- 2005 313 930
- JP-A- 2007 112 511
- JP-B2- 5 234 002
- KR-Y1- 200 277 447
- US-A- 5 881 435
- US-A1- 2005 204 515

## Description

### FIELD

The present invention relates to a cutting type cable tie, and more particularly, to a cutting type cable tie configured to wrap a subject to be fixated and then be bound, and then to be released without a separate tool.

### BACKGROUND

Generally, a conventional cable tie is used to bind a subject to be fixated or to fixate the same to a certain position. Such a cable tie consists of a fixating portion, and a band portion made of a flexible material, the band portion configured to pass the fixating portion and be fixated, with it wrapping a cable.

However, the widths of the fixating portion and the band portion of such a conventional cable tie are too small, and thus there are problems that it is uneasy to combine the band portion to the fixating portion, and especially, gripping is difficult, making it difficult to fasten the cable tie.

Further, in order to release the conventional cable tie from the state that it is bound to a subject, a sharp cutting tool must be used to cut the band portion, which leads to a problem that the fixated subject may be cut by the sharp tool.

Korean Utility Model Registration no. 20-0454874 (published on August 2, 2011) discloses a cable tie where a connecting portion is connected to the fixating portion, and a gripping portion to be gripped by an operator in the process of fixating a subject is connected to the connecting portion, thereby enabling easy operation, and when a band portion is inserted into the fixating portion to maintain the state of wrapping the subject fixated, a portion of the band portion that protrudes after wrapping the subject may be cut through a cutting groove formed on at least one side of both sides of the band portion. However, in the aforementioned, only a portion of the band portion, that passed the fixating portion after wrapping the subject and is thus exposed, can be cut through the cutting groove easily without a separate tool, and thus there is a problem that in order to release the binding of the cable tie that has been inserted into the fixating portion and is thus wrapping the subject, there is inconvenience of having to cut the fixating portion through a separate tool.

Therefore, the present disclosure relates to a cutting type cable tie that can be released after wrapping a subject to be fixated and is bound, without a separate tool.
US20050204515 discloses a cable tie according to the preamble of claim 1.

### SUMMARY

Therefore, a purpose of the present disclosure is to solve the aforementioned problems of prior art, that is, to provide a cutting type cable tie that can bind a band portion wrapping a subject to be fixated, to a fixating portion, and that, when tensile force is applied to a cutting portion connected to the fixating portion and is thus cut, the fixating portion may be cut by the tensile force applied to the cutting portion, thereby releasing the binding of the band portion.

According to the invention there is provided a cutting type cable tie for wrapping and fixating a subject to be fixated, the cutting type cable tie including a band portion made of a flexible material so as to wrap the subject to be fixated, and provided with a plurality of stumbling bumps on an outer side of the band portion; a fixating portion of which one side is connected to the band portion, and configured such that a portion of the band portion wrapping the subject to be fixated may be inserted into the fixating portion, and such that, when the fixating portion stumbles on the stumbling bump of the inserted band portion, the band portion may be bound, with the band portion wrapping the subject to be fixated; and a plurality of cutting portions connected to another side of the fixating portion, and configured such that, when mutually cut, the other side of the fixating portion may be cut.

Further, the fixating portion includes a main body provided with an insertion groove such that the portion of the band portion may be bound and inserted, and a plurality of fixating bumps configured to be mutually cut and formed at the other side, so that the binding of the portion of the band portion bound and inserted into the insertion groove may be released; and a fixating member provided in an inner side of the main body, and configured to be bound, with the band portion fixated to the main body, when the portion of the band portion inserted into the insertion groove stumbles on the stumbling bump.

Further, the plurality of fixating bumps may be configured in dented shapes that enable easy cutting such that the plurality of fixating bumps may be mutually cut along the cutting portion, when the cutting portion is mutually cut.

According to the invention the cutting portion includes a first cutting portion connected from the plurality of fixating bumps towards the other side; and a second cutting portion configured to combine with the first cutting portion, and to be connected from the plurality of fixating bumps towards the other side, the first cutting portion comprises a first gripping portion provided with a gripping cross-section where gripping may be performed; and a first connecting portion configured such that the first gripping portion may be connected to a first fixating bump of the plurality of fixating bumps; and the second cutting portion comprises a second gripping portion provided with a gripping cross-section where gripping may be performed; and a second connecting portion configured such that the second gripping portion may be connected to a second fixating bump of the plurality of fixating bumps.

Further, the first connecting portion and the second connecting portion may be configured in dented shapes that enable easy cutting such that, when the tensile force is applied, the first connecting portion and the second connecting portion may be mutually cut by the tensile force and thus the other side of the fixating portion may be cut.

According to the aforementioned, there is an effect that, when the band portion is inserted into the fixating portion and is thus bound, and the tensile force is applied to the cutting portion connected to the fixating portion, the binding of the band portion may be released by the tensile force being applied to the cutting portion.

Further, the operator may grip the cutting portion connected to the fixating potion and perform the operation of wrapping the subject to be fixated with the band portion, thereby providing an effect of improved operability.

### BRIEF DESCRIPTION OF THE DRAWINGS

FIG. 1 is a perspective view of a cutting type cable tie according to an embodiment of the present disclosure.
FIG. 2 is a view provided to explain a structure of the cutting type cable tie according to an embodiment of the present disclosure.
FIG. 3 is a view provided to explain a connecting structure of the cutting portion and the fixating portion according to an embodiment of the present disclosure.
FIG. 4 is a view illustrating a state where the fixating portion is being mutually cut by the cutting portion according to an embodiment of the present disclosure.
FIG. 5 is a plane view provided to explain a shape of the cutting portion according to an embodiment of the present disclosure.
FIG. 6 is a plane view provided to explain a shape of the fixating portion according to an embodiment of the present disclosure.
FIG. 7 is a cross-sectional view of the cutting type cable tie according to another embodiment of the present disclosure.

### DETAILED DESCRIPTION

Hereinbelow, embodiments of the present disclosure will be explained in detail with reference to the attached drawings. These embodiments to be introduced hereinbelow are provided as examples so that the concept of the present disclosure can be sufficiently delivered to a person skilled in the art. It should be understood that the present disclosure is not limited to the embodiments explained hereinbelow but may be specified in other forms. Further, in order to clearly explain the present disclosure, parts not related to the explanation were omitted, and in the drawings, the widths, lengths, thicknesses and the like of configuration elements may have been exaggerated. Like reference numerals indicate like or similar configuration elements throughout the entirety of the specification.

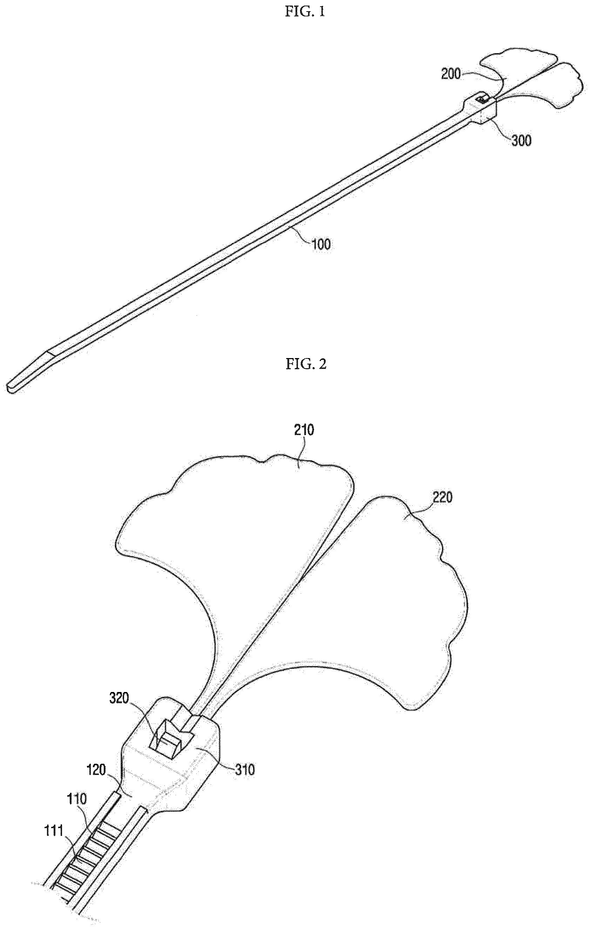

FIG. 1 is a perspective view of the cutting type cable tie according to an embodiment of the present disclosure.

As illustrated in FIG. 1, the cutting type cable tie according to an embodiment of the present disclosure is configured to bind a subject to be fixated by wrapping the circumference of the subject or to have the binding released thereafter. The cutting type cable tie according to an embodiment of the present disclosure includes a band portion 100, a cutting portion 200 and a fixating portion 300.

The band portion 100 is connected to one side of the fixating portion 300 so as to wrap the circumference of the subject to be fixated.

Further, when the band portion 100 wraps the subject to be fixated, a portion of the band portion 100 is inserted into the fixating portion 300 and then bound, thereby maintaining the state of wrapping the subject being fixated.

Further, the band portion 100 may be made of a flexible material so as to wrap the circumference of the subject to be fixated regardless of the outer appearance of the subject.

The cutting portion 200 is connected to another side of the fixating portion 300 so that the portion of the band portion 100 inserted into the fixating portion 300 may be released from being bound with fixating portion 300.

Further, by gripping a gripping cross-section and applying tensile force, the cutting portion 200 may perform the operation of wrapping the subject to be fixated through the band portion 100.

The fixating portion 300 is provided to have the band portion 100 bound, with the band portion 100 wrapping the subject to be fixated, after the portion of the band portion 100 wrapping the circumference of the subject being fixated is inserted.

Further, when cut by the tensile force applied by the operator gripping the cutting portion 200, a portion of the band portion 100 may be released from being bound with the fixating portion 300.

Here, the method for the cutting portion 200 to have the portion of the band portion 100 released from being bound with the fixating portion 300 will be explained in detail hereinbelow with reference to FIG. 2.

FIG. 2 is a view illustrating the structure of the cutting type cable tie according to an embodiment of the present disclosure.

As illustrated in FIG. 2, the band portion 100 is configured to wrap the subject to be fixated, and to be bound after the band portion 100 wraps the subject and inserted into the fixating portion 300, and band portion 100 includes a band 110 and a tensile portion 120.

The band 110 is configured to be inserted into the fixating portion 300, and to be bound after it wraps the circumference of the subject to be fixated, so that the band 110 is maintained in the state of wrapping the subject being fixated.

Specifically, the band 110 is connected to one side of the fixating portion 300, and is made of a flexible material so as to wrap the subject to be fixated regardless of the circumference of the subject. And the band 110 is provided with a stumbling bump 111 so that it may stumble on a fixating member 320 of the fixating portion 300 once the band 110 is inserted into the fixating portion 300, and may be bound to the fixating portion 300. The fixating member 320 will be explained in detail hereinbelow.

The tensile portion 120 is provided between the band 110 and one side of the fixating portion 300. The tensile portion 120 is made of an elastic material such as an elastic body or rubber having elastic force so that the band 110 may flexibly wrap the subject being fixated and be inserted into the fixating portion 300.

Further, the cutting portion 200 has a gripping cross-section that may be gripped by the operator. The cutting portion 200 is configured to release the portion of the band 110 that has been inserted into the fixating portion and bound with the fixating portion. The cutting portion 200 includes a first cutting portion 210 and a second cutting portion 220.

The first cutting portion 210 is configured to be connected to another side of the fixating portion 300, and to have that other side of the fixating portion 300 cut, so that the portion of the band 110 inserted into the fixating portion 300 may be released from being bound with the fixating portion 300.

Specifically, the first cutting portion 210 is connected to a first fixating bump 312 provided at that other side of the fixating portion 300, and when it is gripped by the operator and applied with tensile force so that the first fixating bump 312 and a second fixating bump 313 of the fixating portion 300 may be cut, a portion of the band 110 may be released from being bound towards the other side of the fixating portion 300. The first fixating bump 312 and the second fixating bump 313 will be explained in detail hereinbelow.

The second cutting portion 220 is connected to the other side of the fixating portion 300 just as the first cutting portion 210, but the second cutting portion 220 is configured such that the other side of the fixating portion 300 may be cut, thereby releasing the portion of the band 110 that has been inserted into the fixating portion 300 from being bound with the fixating portion 300.

Specifically, the second cutting portion 220 is connected to the second fixating bump 313 provided at the other side of the fixating portion and that will be explained in detail hereinbelow, and when it is gripped by the operator and applied with tensile force so that the first fixating bump 312 and the second fixating bump 313 of the fixating portion 300 that will be explained in detail hereinbelow may be cut, a portion of the band 110 may be released from being bound towards the other side of the fixating portion 300.

Further, the fixating portion 300 is configured to have the portion of the band 110 bound, with the band 110 wrapping the subject to be fixated, after the portion of the band 110 is inserted, or to have the portion of the band 110 released from being bound, through the tensile force being applied to the first cutting portion 210 and the second cutting portion 220. Such a fixating portion 300 includes a main body 310 and a fixating member 320.

The main body 310 is configured such that a portion of the band 110 may be inserted and bound after the portion of the band 110 wraps the subject to be fixated, and to have the inserted portion of the band 110 released from being bound.

Specifically, one side of the main body 310 is connected to the tensile portion 120 combined with the band 110, and is provided with an insertion groove 311 that will be explained in detail hereinbelow and into which the portion of the band 110 may be inserted after wrapping the subject to be fixated, and another side of the main body 310 is provided with the first fixating bump 312 and the second fixating bump 313 that will be explained in detail hereinbelow and that may be mutually cut, so that when tensile force is transferred through the first cutting portion 210 and the second cutting portion 220, the first fixating bump 312 and the second fixating bump 313 that will be explained in detail hereinbelow may be mutually cut, thereby releasing the inserted portion of the band 110 from being bound.

The fixating member 320 is configured such that, after a portion of the band 110 is inserted into the main body 310, the portion of the band 110 may be bound, with the portion of the band 110 wrapping the subject to be fixated.

Specifically, the fixating member 320 is provided in an inner side of the insertion groove 311 that will be explained in detail hereinbelow, and when a portion of the band 110 is inserted into the insertion groove 311 and is bound, the stumbling bump 111 of the band 110 may be stumbled on in the process of the portion of the band 110 being inserted into the insertion groove 311, thereby preventing the binding of the portion of the band 110 from being released in the opposite direction from the direction in which the portion of the band 110 has been inserted into the insertion groove 311.

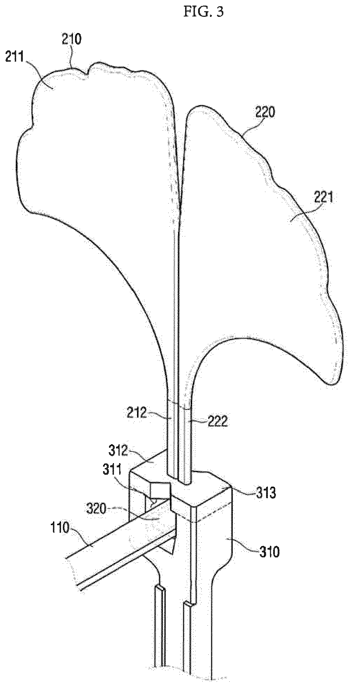

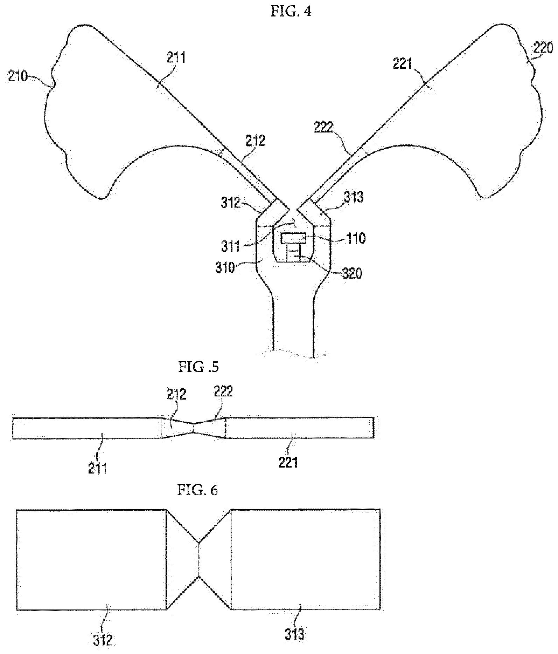

FIG. 3 is a view provided to explain the connecting structure of the cutting portion and the fixating portion according to an embodiment of the present disclosure, and FIG. 4 is a view illustrating a state of the fixating portion being mutually cut by the cutting portion according to an embodiment of the present disclosure.

As illustrated in FIGS. 3 and 4, the first cutting portion 210 and the second cutting portion 220 are configured such that, when gripped by the operator and applied with tensile force, the first cutting portion 210 and the second cutting portion 220 may be mutually cut, thereby cutting the other side of the fixating portion 300. The first cutting portion 210 and the second cutting portion 220 includes a first gripping portion 211, a first connecting portion 212, a second gripping portion 221 and a second connecting portion 222.

The first gripping portion 211 is formed in the first cutting portion 210, but to have the first cutting portion 210 and the second cutting portion 220 mutually cut when gripped by the operator and thus applied with tensile force.

Specifically, the first gripping portion 211 is connected to the first fixating bump 312 that will be explained in detail hereinbelow through the first connecting portion 212, and is configured such that the first connecting portion 212 and the second connecting portion 222 may be mutually cut when gripped by the operator and applied with tensile force.

The second gripping portion 221 is formed in the second cutting portion 220, but to have the first cutting portion 210 and the second cutting portion 220 mutually cut when gripped by the operator and thus applied with tensile force.

Specifically, the second gripping portion 221 is connected to the second fixating bump 313 that will be explained in detail hereinbelow through the second connecting portion 222, and is configured such that the first connecting portion 212 and the second connecting portion 222 may be mutually cut when gripped by the operator and applied with tensile force.

Here, the first gripping portion 211 and the second gripping portion 221 are made of a flexible material just as the band portion 100, and in the form of two pieces of leaves.

Further, the first gripping portion 211 and the second gripping portion 221 are gripping cross-sections that may be gripped by the operator, enabling easy gripping by the operator so that the operator may perform the operation of wrapping the subject to the fixated, and also serves an aesthetic function of beautifying the outer appearance that goes well with the surrounding environment.

For this purpose, the first gripping portion 211 and the second gripping portion 221 are not limited to the form of two pieces of leaves as illustrated in FIGs. 3 and 4, but may be made in various forms suitable to the environment.

The first connecting portion 212 is configured such that, when tensile force is applied to the first gripping portion 211 and the second gripping portion 221 with the first connecting portion 212 combined with the second connecting portion 222, the first connecting portion 212 and the second connecting portion 222 may be mutually cut, and therefore the first fixating bump 312 and the second fixating bump 313, that will be explained in detail hereinbelow, may be cut.

The second connecting portion 222 is configured such that, when tensile force is applied to the first gripping portion 211 and the second gripping portion 221 with the second connecting portion 222 combined with the first connecting portion 212, the first connecting portion 212 and the second connecting portion 222 may be mutually cut, and therefore the first fixating bump 312 and the second fixating bump 313, that will be explained in detail hereinbelow, may be cut.

Further, the main body 310 is configured such that a portion of the band 110 may be inserted therein, and also such that, when tensile force is applied to the first gripping portion 211 and the second gripping portion 221 and thus the first connecting portion 212 and the second connecting portion 222 are mutually cut, the portion of the band 110, that stumbled on the fixating member 320 and thus bound, may be released. Such a main body 310 includes the insertion groove 311, the first fixating bump 312 and the second fixating bump 313.

The insertion groove 311 is configured such that the portion of the band 110 wrapping the subject being fixated may be inserted therein.

Here, the portion of the band 110 becomes bound as the stumbling bump 111 of the portion of the band 110 stumbles on the fixating member 320 provided in the inner side of the insertion groove 311, but the insertion groove 311 may also be formed in the same shape as the band 110 so that the cohesion force of binding the portion of the band 110 may be increased, thereby enabling the band 110 to closely contact the inner side of the insertion groove 311 and provide safe binding.

The first fixating bump 312 is configured such that, when the first connecting portion 212 and the second connecting portion 222 are mutually cut, the first fixating bump 312 may be mutually cut with the second fixating bump 313, thereby enabling the binding of the portion of the band 110 to be released.

Specifically, when tensile force is applied to the first gripping portion 211 and the second gripping portion 221 and thus the first connecting portion 212 and the second connecting portion 222 are mutually cut, the first fixating bump 312 may be mutually cut with the second fixating bump 313 in the direction in which the first connecting portion 212 and the second connecting portion 222 are mutually cut, thereby enabling the portion of the band 110 that has been inserted into the insertion groove 311 and thus bound by the fixating member 320 to be released.

The second fixating bump 313 is configured such that, when the first connecting portion 212 and the second connecting portion 222 are mutually cut, the second fixating bump 313 may be mutually cut with the first fixating bump 312, thereby enabling the binding of the portion of the band 110 to be released.

Specifically, when tensile force is applied to the first gripping portion 211 and the second gripping portion 221 and thus the first connecting portion 212 and the second connecting portion 222 are mutually cut, the second fixating bump 313 may be mutually cut with the first fixating bump 312 in the direction in which the first connecting portion 212 and the second connecting portion 222 are mutually cut, thereby enabling the portion of the band 110 that has been inserted into the insertion groove 311 and thus bound by the fixating member 320 to be released.

Here, the first fixating bump 312 and the second fixating bump 313 may be made of an elastic body such that they may be mutually cut easily along the direction in which the first connecting portion 212 and the second connecting portion 222 are mutually cut, and so as to prevent the binding of the portion of the band 110 from being released due to being curved or damaged by the tensile force.

FIG. 5 is a plane view provided to explain the shape of the cutting portion according to an embodiment of the present disclosure.

As illustrated in FIG. 5, in order to enable easy mutual cutting of the first cutting portion 210 and the second cutting portion 220, the portion where the first connecting portion 212 and the second connecting portion 222 are combined are provided in dented shapes that are smaller than the widths of the first gripping portion 211 and the second gripping portion 221.

Therefore, when the operator grips the first gripping portion 211 and the second gripping portion 221 and applies tensile force, by the dented groove that is narrower than the widths of the first gripping portion 211 and the second gripping portion 221, the first connecting portion 212 and the second connecting portion 222 may be cut.

FIG. 6 is a plane view provided to explain the shape of the fixating portion according to an embodiment of the present disclosure.

As illustrated in FIG. 6, in order to enable easy mutual cutting, the portion where the first fixating bump 312 and the second fixating bump 313 are combined are provided in dented shapes that are smaller than the widths of the first fixating bump 312 and the second fixating bump 313.

Therefore, when the operator grips the first gripping portion 211 and the second gripping portion 221 and thus the first connecting portion 212 and the second connecting portion 222 are mutually cut, by the dented groove that is narrower than the widths of the first fixating bump 312 and the second fixating bump 313, the first fixating bump 312 and the second fixating bump 313 are mutually cut in the direction in which the first connecting portion 212 and the second connecting portion 222 are cut, thereby enabling the portion of the band 110 that has been inserted into the insertion groove 311 and bound by the fixating member 320 to be released towards the first fixating bump 312 and the second fixating bump 313.

To sum up the embodiments of the present disclosure explained so far, the present disclosure is configured such that, when a portion of the band 110 wrapping the subject to be fixated is inserted into the insertion groove 311 of the main body 310, the stumbling bump 111 of the portion of the band 110 is stumbled on by the fixating member 320 provided in the inner side of the insertion groove 311, thereby binding the portion of the band 110, and when the operator applies tensile force to the first gripping portion 211 and the second gripping portion 221, the first connecting portion 212 and the second connecting portion 222 are mutually cut, and the binding of the portion of the band 110 inserted into the main body 310 is released towards the first fixating bump 312 and the second fixating bump 313 in the direction in which the first connecting portion 212 and the second connecting portion 222 are mutually cut.

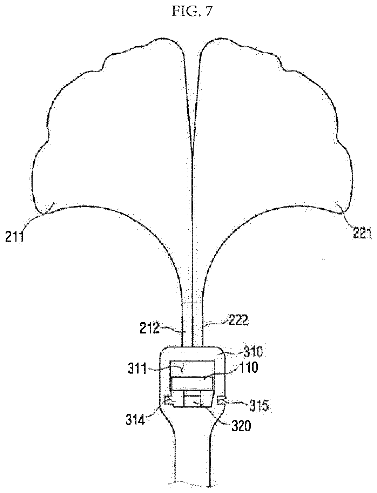

FIG. 7 is a cross-sectional view of the cutting type cable tie according to another embodiment of the present disclosure.

As illustrated in FIG. 7, the cutting type cable tie according to another embodiment of the present disclosure is configured to enable cutting both sides of the main body 310 into which a portion of the band 110 wrapping the subject to be fixated is inserted, and this type of cutting type cable tie includes a first dented groove 314 and a second dented groove 315 having dented shapes at both sides of the main body 310, respectively.

The first dented groove 314 is formed in an inner side of the main body 310 as illustrated in FIG. 7, such that, when the operator applies tensile force to the both sides of the main body 310, the both sides of the main body 310 may be cut by the tensile force.

Here, as the first dented groove 314 is formed in the inner side of the main body 310, a width of a portion of one side of the both sides of the main body 310 becomes narrow, thereby enabling easy cutting by the tensile force.

As illustrated in FIG. 7, the second dented groove 315 is formed in the outer side of the main body 310, so that when the operator applies tensile force to the both sides of the main body 310, the both sides of the main body 310 may be easily cut by the tensile force of the operator.

Here, as the second dented groove 315 is formed in the outer side of the main body 310, a width of a portion of one of the both sides and the other side of the main body 310 becomes narrow, thereby enabling easy cutting by the tensile force of the operator.

Here, the first dented groove 314 and the second dented groove 315 may be configured in shapes where the dents are directed towards one side of the both sides, so that when the operator grips the first cutting portion 210 and the second cutting portion 220 and applies the tensile force to one of the directions of the both sides of the main body 310 to twist the main body 310, as the main body 310 gets cut, the binding of the portion of the band 110 that had been inserted into the main body 310 may be released.

Further, although it was explained in another embodiment of the present disclosure, that the first dented groove 314 and the second dented grove 315 are provided in shapes that are opened towards one side direction of the both sides, the first dented groove 314 and the second dented groove 315 may be opened towards different directions from each other, or a dented groove may be formed in each side of the inner side and outer side of both sides of the main body 310 to enable easy cutting.

That is, as long as the main body 310 can be twisted and cut by the tensile force of the operator, there is no limitation to the shape of the first dented groove 314 and the second dented groove 315, and the shape of the first dented groove 314 and the second dented groove 315 are not limited to that illustrated in FIG. 7.

Accordingly, the band portion is inserted into the fixating portion and is thus bound, and when the tensile force is applied to the cutting portion connected to the fixating portion, the fixating portion may be cut by the tensile force being applied to the cutting portion, thereby providing an effect of releasing the binding of the band portion.

Further, it is possible for the operator to perform the operation of wrapping the subject to be fixated with the operator gripping the cutting portion connected to the fixating portion, thus providing an effect of improving operability.

The right of the scope of the present disclosure is not limited to the aforementioned embodiments but may be realized in various types of embodiments within the claims attached hereto. It will be apparent to one of ordinary skill in the art that various changes in form and details may be made in these examples without departing from the scope of the appended claims.

## Claims

1. A cutting type cable tie for wrapping and fixating a subject to be fixated, the cutting type cable tie comprising:
a band portion (100) made of a flexible material so as to wrap the subject to be fixated, and provided with a plurality of stumbling bumps (111) on an outer side of the band portion (100);
a fixating portion (300) of which one side is connected to the band portion (100), and configured such that a portion of the band portion (100) wrapping the subject to be fixated may be inserted into the fixating portion (300), and such that, when the fixating portion (300) stumbles on the stumbling bump (111) of the inserted band portion (100), the band portion(100) may be bound, with the band portion (100) wrapping the subject to be fixated; and
a plurality of cutting portions (210, 220) connected to another side of the fixating portion (300), and configured such that, when mutually cut, the other side of the fixating portion (300) may be cut,
wherein the fixating portion (300) comprises:
a main body (310) provided with an insertion groove (311) such that the portion of the band portion (100) may be bound and inserted, and a plurality of fixating bumps (312, 313) configured to be mutually cut and formed at the other side of the fixating portion (300), so that the binding of the portion of the band portion (100) bound and inserted into the insertion groove (311) may be released; and
a fixating member (320) provided in an inner side of the main body (310), and configured to be bound, with the band portion (100) fixated to the main body (310), when the portion of the band portion (100) inserted into the insertion groove (311) stumbles on the stumbling bump (111);
the cutting type cable tie being **characterized in that** the cutting portions (210, 220) comprise:
a first cutting portion (210) connected from the plurality of fixating bumps (312, 313) towards the other side; and
a second cutting portion (220) configured to combine with the first cutting portion (210), and to be connected from the plurality of fixating bumps (312, 313) towards the other side,
the first cutting portion (210) comprises:
a first gripping portion (211) provided with a gripping cross-section where gripping may be performed; and
a first connecting portion (212) configured such that the first gripping portion (211) may be connected to a first fixating bump of the plurality of fixating bumps (312, 313); and
the second cutting portion (220) comprises:
a second gripping portion (221) provided with a gripping cross-section where gripping may be performed; and
a second connecting portion (222) configured such that the second gripping portion (221) may be connected to a second fixating bump of the plurality of fixating bumps (312, 313).

2. The cutting type cable tie according to claim 1,
wherein the plurality of fixating bumps (312, 313) are configured in dented shapes that enable easy cutting such that the plurality of fixating bumps (312, 313) may be mutually cut along the cutting portion, when the cutting portion is mutually cut.

3. The cutting type cable tie according to claim 1,
wherein the first connecting portion (212) and the second connecting portion (222) are configured in dented shapes that enable easy cutting such that, when the tensile force is applied, the first connecting portion (212) and the second connecting portion (222) may be mutually cut by the tensile force and thus the other side of the fixating portion (300) may be cut.

## Patentansprüche

1. Trennbarer Kabelbinder zum Umwickeln und Fixieren eines zu fixierenden Gegenstands, der trennbare Kabelbinder umfassend:
einen Bandabschnitt (100), der aus einem flexiblen Material hergestellt ist, um den zu fixierenden Gegenstand zu umwickeln, und der auf einer Außenseite des Bandabschnitts (100) mit einer Vielzahl von Rastvorsprüngen (111) versehen ist;
einen Fixierabschnitt (300), von dem eine Seite mit dem Bandabschnitt (100) verbunden und dergestalt ausgebildet ist, dass ein Abschnitt des Bandabschnitts (100), der den zu fixierenden Gegenstand umwickelt, dergestalt in den Fixierabschnitt (300) eingeführt werden kann, dass, wenn der Fixierabschnitt (300) auf den Rastvorsprung (111) des eingeführten Bandabschnitts (100) stößt, der Bandabschnitt (100) gebunden werden kann, wobei der Bandabschnitt (100) den zu fixierenden Gegenstand umwickelt; und
eine Mehrzahl von Trennabschnitten (210, 220), die mit einer anderen Seite des Fixierabschnitts (300) verbunden und dergestalt ausgebildet sind, dass, wenn sie wechselseitig zerteilt werden, die andere Seite des Fixierabschnitts (300) zerteilt werden kann,
wobei der Fixierabschnitt (300) umfasst:
einen Hauptkörper (310), der mit einer Einfügenut (311), so dass der Abschnitt des Bandabschnitts (100) gebunden und eingefügt werden kann, und einer Mehrzahl von Fixierschwellen (312, 313) versehen ist, die ausgebildet sind, wechselseitig zerteilt zu werden und an der anderen Seite des Fixierabschnitts (300) gebildet sind, so dass die Bindung des gebundenen und in die Einfügenut (311) eingeführten Abschnitts des Bandabschnitts (100) gelöst werden kann; und
ein Fixierelement (320), das in einer Innenseite des Hauptkörpers (310) vorgesehen und ausgebildet ist, gebunden zu werden, wobei der Bandabschnitt (100) an dem Hauptkörper (310) fixiert wird, wenn der in die Einfügenut (311) eingeführte Abschnitt des Bandabschnitts (100) an den Rastvorsprung (111) stößt;
wobei der trennbare Kabelbinder **dadurch gekennzeichnet ist, dass** die Trennabschnitte (210, 220) umfassen:
einen ersten Trennabschnitt (210), der mit der Mehrzahl von Fixierschwellen (312, 313) zu der anderen Seite hin verbindbar ist; und
einen zweiten Trennabschnitt (220), der zur Kombination mit dem ersten Trennabschnitt (210) ausgebildet ist, und der ausgebildet ist, mit der Mehrzahl von Fixierschwellen (312, 313) zur anderen Seite hin verbindbar ist,
der erste Trennabschnitt (210) umfassend:
einen ersten Griffabschnitt (211), der mit einem Griffquerschnitt versehen ist, an dem ein Greifen erfolgen kann; und
einen ersten Verbindungsabschnitt (212), der dergestalt ausgebildet ist, dass der erste Griffabschnitt (211) mit einer ersten Fixierschwelle der Mehrzahl der Fixierschwellen (312, 313) verbindbar ist; und
der zweite Trennabschnitt (220) umfassend:
einen zweiten Griffabschnitt (221), der mit einem Griffquerschnitt versehen ist, an dem ein Greifen erfolgen kann; und
einen zweiten Verbindungsabschnitt (222), der dergestalt ausgebildet ist, dass der zweite Griffabschnitt (221) mit einer zweiten Fixierschwelle der Mehrzahl der Fixierschwellen (312, 313) verbindbar ist.

2. Trennbarer Kabelbinder nach Anspruch 1,
wobei die Mehrzahl der Fixierschwellen (312, 313) in Kerbformen ausgebildet sind, die ein einfaches Trennen ermöglichen, so dass die Mehrzahl der Fixierschwellen (312, 313) voneinander entlang des Trennabschnitts getrennt werden können, wenn der Trennabschnitt aufgetrennt wird.

3. Trennbarer Kabelbinder nach Anspruch 1,
wobei der erste Verbindungsabschnitt (212) und der zweite Verbindungsabschnitt (222) in Kerbformen ausgebildet sind, die ein einfaches Trennen ermöglichen, so dass, wenn die Zugkraft aufgebracht wird, der erste Verbindungsabschnitt (212) und der zweite Verbindungsabschnitt (222) durch die Zugkraft voneinander getrennt werden können und somit die andere Seite des Fixierabschnitts (300) getrennt werden kann.

## Revendications

1. Attache de câble de type à découpe pour entourer et fixer un objet devant être fixé, cette attache de câble de type à découpe comprenant
une partie de bande (100) constituée d'un matériau flexible de façon à entourer l'objet devant être fixé et comportant une pluralité de saillies de blocage (111) formées sur sa face externe,
une partie de fixation (300) dont un côté est relié à la partie de bande (100) et qui est agencée de telle sorte qu'une partie de la partie de bande (100) entourant l'objet devant être fixé peut être insérée dans la partie de fixation (300) et que, lorsque la partie de fixation (300) se bloque sur la saillie de blocage (111) de la partie de bande (100) insérée, la partie de bande (100) peut être reliée avec la partie de bande (100) entourant l'objet devant être fixé, et
une pluralité de parties de découpe (210, 220) reliées à un autre côté de la partie de fixation (300) et agencées de façon que, lorsqu'elles sont séparées les unes des autres, l'autre côté de la partie de fixation (300) peut être découpée,
dans laquelle la partie de fixation (300) comprend
un corps principal (310) doté d'une rainure d'insertion (311) telle que la partie de la partie de bande (100) peut être reliée et insérée, et d'une pluralité de saillies de fixation (312, 313) configurées pour être séparées les une des autres et formées sur l'autre côté de la partie de fixation (300), de sorte que la liaison de la partie de la partie de bande (100) reliée et insérée dans la rainure d'insertion (311) peut être relâchée, et
un élément de fixation (320) agencé sur un côté intérieur du corps principal (310) et configuré pour être relié avec la partie de bande (100) fixée au corps principal (310) quand la partie de la partie de bande (100) insérée dans la rainure d'insertion (311) se bloque sur la saillie de blocage (111),
l'attache de câble de type à découpe étant **caractérisée en ce que** les parties de découpe (210, 220) comprennent
une première partie de découpe (210) reliée depuis la pluralité de saillies de fixation (312, 313) jusqu'à l'autre côté et
une seconde partie de découpe (220) configurée pour se combiner avec la première partie de découpe (210) et être reliée depuis la pluralité de saillies de fixation (312, 313) jusqu'à l'autre côté,
la première partie de découpe (210) comprend
une première partie de préhension (211) dotée d'une section transversale de préhension où la préhension peut avoir lieu et
une seconde partie de liaison (222) configurée de sorte que la seconde partie de préhension (221) peut être reliée à une seconde saillie de fixation de la pluralité de saillies de fixation (312, 313).

2. Attache de câble de type à découpe selon la revendication 1,
dans laquelle la pluralité de saillies de fixation (312, 313) sont configurées en formes dentelées qui permettent un découpage facile de sorte que la pluralité de saillies de fixation (312, 313) peuvent être séparées entre elles le long de la partie de découpe quand la partie de découpe est découpée.

3. Attache de câble de type à découpe selon la revendication 1,
dans laquelle la première partie de liaison (212) et la seconde partie de liaison (222) sont configurées en formes dentelées qui permettent un découpage facile de sorte que, quand la force de traction est appliquée, la première partie de liaison (212) et la seconde partie de liaison (222) peuvent être séparées entre elles par la force de traction et, par conséquent, l'autre côté de la partie de fixation (300) peut être découpé.
